# EUROPÄISCHE PATENTSCHRIFT

(11) **EP 1 152 377 B1**
(45) Veröffentlichungstag und Bekanntmachung des Hinweises auf die Patenterteilung: **25.01.2006**
(21) Anmeldenummer: 01106309.6
(22) Anmeldetag: 15.03.2001
(51) Int. Cl.: G07F 7/10

(54) **Verfahren und Endgerät zur Durchführung von Transaktionen unter Einschaltung eines tragbaren Datenträgers**
Method and terminal apparatus for performing transactions using a portable data carrier
Procédé et terminal pour mettre en oeuvre des transactions en utilisant un support de données portatif

(30) Priorität: 28.03.2000 DE 10015098
(43) Veröffentlichungstag der Anmeldung: 07.11.2001
(73) Patentinhaber: Giesecke & Devrient GmbH, 81677 München (DE)
(72) Erfinder: Albrecht, Norbert, 10117 Berlin (DE); Grünzig, Stefan, 84085 Kranzberg (DE); Scheybani, Tschangiz, Dr., 81677 München (DE)
(74) Vertreter: Klunker . Schmitt-Nilson . Hirsch

(56) Entgegenhaltungen:
- EP-A- 0 425 053
- EP-A- 0 843 290
- EP-A- 0 935 224
- WO-A-94/11849
- WO-A-96/13814
- WO-A-98/48390
- WO-A-98/59327
- WO-A-99/64996
- DE-A- 19 818 846
- US-A- 5 940 510
- WEIKMANN F: "AUTHENTICATION PROTOCOLS FOR MICROCONTROLLER SMART CARDS" AEU INTERNATIONAL JOURNAL OF ELECTRONICS AND COMMUNICATIONS, GUSTAV FISHER VERLAG, JENA, DE, Bd. 53, Nr. 4, 1999, Seiten 222-226, XP000928269 ISSN: 1434-8411

## Beschreibung

Die Erfindung geht aus von einem Verfahren bzw. Endgerät gemäß Oberbegriff der unabhängigen Ansprüche.

Verfahren bzw. Geräte dieser Art sind zur öffentlichen Nutzung in Gestalt von Terminals für Bank- oder Geldkarten weit verbreitet. Vorgeschlagen wurden auch bereits Endgeräte zur Nutzung in Heimanwendungen. Ein solches Endgerät ist beispielsweise aus der DE-U-298 07 597 entnehmbar. Das darin beschriebene verteilte Endgerät wird durch Zusammenwirken mehrerer unabhängiger Komponenten gebildet. Die wesentlichen unabhängigen Komponenten sind eine Geldkarten-Lese/Schreibeinheit, ein damit verbundener Heimrechner, ein Datenübertragungsnetz sowie ein darüber mit dem Heimrechner verbundener Server. Die für die Erzeugung der Sicherheit bei der Durchführung einer Transaktion relevanten Elemente befinden sich bei diesem bekannten Endgerät im Server. Diese Anordnung der sicherheitsrelevanten Elemente im Server ermöglicht auf Nutzerseite die Verwendung üblicher und dadurch kostengünstiger Heimgeräte. Allerdings hat ein Nutzer keine Möglichkeit, auf die vom Server bereitgestellte Sicherheitswirkung Einfluß zu nehmen. Insbesondere kann er Angriffsversuche gegen den Server über das offene Netz zwischen Heimrechner und Server nicht verhindern.

EP-A-425053 offenbart ein Verfahren zur Nutzungssicherung eines Computers mit Hilfe einer Chipkarte. Um eine Nutzungserlaubnis zu erhalten, muß ein Nutzer seine Chipkarte präsentieren und sich ihr gegenüber zunächst durch Eingabe einer PIN identifizieren. Anschließend erfolgt eine Authentisierung der Chipkarte gegen den Computer durch ein einseitiges Challenge-Response-Verfahren. Die Authentisierungsprüfung wird durch ein spezielles Sicherheitselement vorgenommen, dem von dem Computer eine Zufallszahl für das Challenge-Response-Verfahren zugeführt wird. Diese bekannte Lösung stellt sicher, daß nur bestimmte Nutzer auf ein Endgerät zugreifen können. Möglichkeiten zur Einflußnahme auf ein dem Endgerät nachgeschaltetes Netz nach erfolgreicher Authentisierung werden aber nicht beschrieben.

Der Erfindung liegt hiervon ausgehend die Aufgabe zugrunde, ein Verfahren bzw. ein Endgerät anzugeben, die einerseits mit handelsüblichen Heimkomponenten auskommen, dabei jedoch bereits auf der Nutzerseite sicherstellen, daß keine Manipulation einer Transaktion über das das Endgerät verbindende Netz erfolgen kann.

Diese Aufgabe wird gelöst durch ein Verfahren bzw. ein Endgerät mit den Merkmalen der unabhängigen Ansprüche.

Das erfindungsgemäße Verfahren sowie das erfindungsgemäße Endgerät haben den Vorteil, daß es sich für eine bestimmte Anzahl von tragbaren Datenträgern wie ein sicheres, zur Aufstellung an öffentlich zugänglichen Orten geeignetes Kartenterminal, z.B. einem POS-Terminal verhält und eine manipulationssichere Eingabe einer Benutzeridentifikationsinformation erlaubt. Insbesondere erfolgt die Prüfung einer Benutzeridentifikationsinformation durch einen Datenträger nur, wenn zuvor mittels des Einsatzmodules die Zulässigkeit einer solchen Prüfung festgestellt wurde. Die einzelnen Komponenten des Endgerätes müssen dabei keine besonderen Sicherheitsmerkmale aufweisen und können von üblicher Bauart sein. Ein weiterer Vorteil der Erfindung liegt darin, daß der mittels des Einsatzmodules überprüfte Ergänzungsprüfkode keinen physikalischen Beschränkungen unterliegt und daher die Verwirklichung des jeweils besten Sicherheitskonzeptes zuläßt. Da die Prüfung des Ergänzungsprüfkodes nur zwischen der zentralen Steuereinheit des Endgerätes und dem Einsatzmodul erfolgt, wird die Handhabung des Endgerätes in keiner Weise beeinträchtigt. Der Ergänzungsprüfkode muß insbesondere einem Benutzer nicht bekannt sein. Damit wird erreicht, daß zunächst einfach aufgebaute Endgeräte auch in Bereichen mit höheren oder hohen Sicherheitsanforderungen, beispielsweise im POS-Bereich, eingesetzt werden können.

In einer besonders vorteilhaften Ausgestaltung ist das Einsatzmodul lösbar in dem Endgerät angeordnet. Für einen Benutzer ergibt sich damit die Möglichkeit, dasselbe Einsatzmodul ggf. in mehreren Endgeräten zu verwenden. Auch läßt sich dadurch durch einfaches Auswechseln des Einsatzmodules ggf. bequem eine Änderung der zusätzlichen Sicherheitsinformation vornehmen.

In einer vorteilhaften Nutzungsvariante dient das Einsatzmodul außer zur Prüfung eines Ergänzungsprüfkodes auch zur Realisierung von Zusatzanwendungen. Zweckmäßig führt das Endgerät desweiteren vor Zuschaltung des Einsatzmodules eine Prüfung durch, ob die mittels eines tragbaren Datenträgers durchzuführende Transaktion (z.B. Cachetransaktion, Bezahltransaktion usw.) überhaupt einer Sicherheitsprüfung mittels des Einsatzmodules bedarf.

Ein Ausführungsbeispiel der Erfindung wird nachfolgend unter Bezugnahme auf die Zeichnung näher erläutert.

Es zeigen
- Fig. 1: die Gesamtstruktur eines zur Ausführung einer Transaktion ausgebildeten Systems,
- Fig. 2: den Informationsfluß zwischen Endgerät und tragbarem Datenträger bei Ausführung einer Transaktion, und
- Fig. 3: den Informationsfluß zwischen den beteiligten Komponenten bei Nutzung des Einsatzmodules für eine Zusatzanwendung.

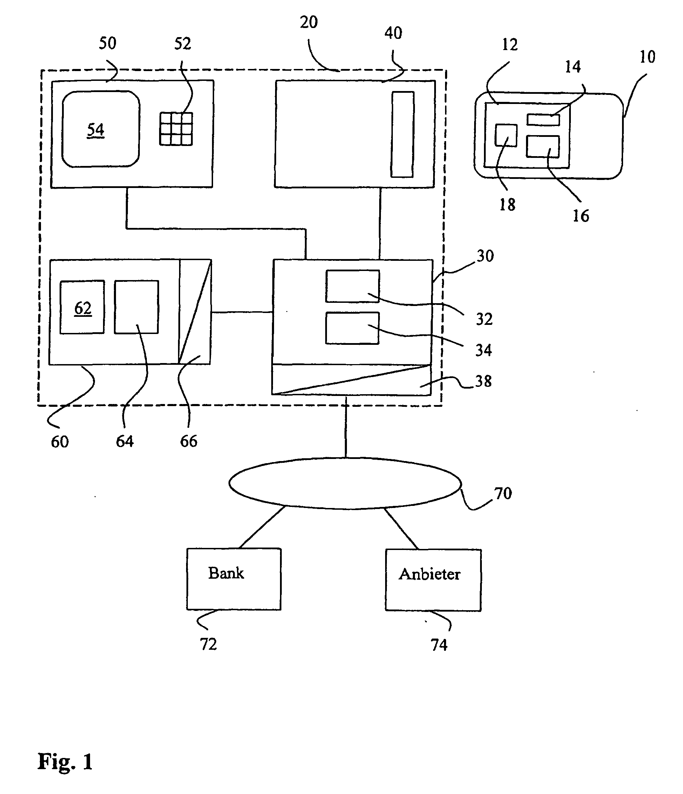

Fig. 1 veranschaulicht die Struktur eines Gesamtsystems zur Ausführung von Transaktionen. Hauptelemente des Systems sind ein tragbarer Datenträger 10, ein Endgerät 20, ein Datenübertragungsnetz 70 sowie über das Datenübertragungsnetz 70 mit dem Endgerät 20 verbundene Netzteilnehmer 72, 74. Die Zahl der an das Datenübertragungsnetz 70 angeschlossenen Netzteilnehmer ist nicht begrenzt.

Der tragbare Datenträger 10 enthält Informationen, die zur Ausführung einer Transaktion mit Hilfe des Endgerätes 20 benötigt werden und ist zur Ausführung von Datenverarbeitungsoperationen geeignet. Zweckmäßigerweise hat er die Gestalt einer Chipkarte. Der tragbare Datenträger 10 besitzt einen integrierten Schaltkreis 12, welcher insbesondere einen Mikroprozessor 14 sowie Speichermittel 16 aufweist. In den Speichermitteln 16 sind unter anderem eine Kennung, bei Ausführung als Chipkarte etwa eine Kartennummer, zur individuellen Kennzeichnung des tragbaren Datenträgers 10 sowie ein Referenzergebnis zur Prüfung der Berechtigung eines Benutzers zur Ausführung einer Transaktion abgelegt. Desweiteren besitzt der tragbare Datenträger 10 kontaktlos oder kontaktbehaftet wirkende Kommunikationsmittel 18, etwa in Gestalt von Kontaktflächen oder in Spulenform, zum Austausch von Signalen mit einem Endgerät 20. Außer der Gestalt einer Chipkarte kann der tragbare Datenträger 10 selbstverständlich jede andere geeignete Erscheinungsform haben, etwa die Form einer Armbanduhr oder eines Anhängers.

Bei dem Endgerät 20 handelt es sich um ein zur Anwendung im Heimbereich eines Nutzers ausgebildetes Terminal zur Kommunikation mit einem tragbaren Datenträger 10. Seine Hauptbestandteile sind eine zentrale Steuereinheit 30, eine Datenträgerschnittstelle 40, eine Bedienvorrichtung 50 sowie ein Einsatzmodul 60. Datenträgerschnittstelle 40, Bedienvorrichtung 50 und ein Einsatzmodul 60 sind über übliche interne Datenverbindungen, insbesondere einen endgeräteinternen Datenbus jeweils mit der zentralen Steuereinheit verbunden.

Über die Datenträgerschnittstelle 40 kommuniziert das Endgerät 20 mit einen tragbaren Datenträger 10. Die Kommunikation kann kontaktbehaftet oder kontaktlos erfolgen. Bei Ausführung des tragbaren Datenträgers 10 als Chipkarte hat die Datenträgerschnittstelle 40 die Gestalt einer Kartenlese- und Schreibeinheit.

Die zentrale Steuereinheit 30 ist wie ein üblicher Computer aufgebaut und verfügt insbesondere über einen Prozessor 32 zur Ausführung von Datenverarbeitungsoperationen sowie Speichermittel 34 zur dauerhaften wie zur vorübergehenden Ablage von Daten. In den Speichermitteln 34 dauerhaft abgelegt ist insbesondere ein Ergänzungsprüfkode, welcher zweckmäßig so umfänglich ist, daß seine Ermittlung ohne erheblichen Mittel- und Zeitaufwand nicht möglich ist. Beispielsweise repräsentiert der Ergänzungsprüfkode einen Zahlenwert mit zehn und mehr Stellen. Zur Anbindung an ein externes Datenübertragungsnetz 70 besitzt die zentrale Steuereinheit 30 ferner eine Schnittstelle 38.

Die Bedienvorrichtung 50 ermöglicht einem Benutzer das Auslösen und / oder das Weiterführen einer Transaktion. Sie verfügt hierzu über Eingabemittel 52 zur benutzerseitigen Eingabe von Informationen für die zentrale Steuereinheit 30 sowie Ausgabemittel 54 zur Mitteilung von Dateninformationen der zentralen Steuereinheit 30 an einen Benutzer. Üblicherweise haben die Eingabemittel 52 die Form einer Tastatur, die Ausgabemittel 54 die Form einer Bildanzeigeeinheit.

Das Einsatzmodul 60 besitzt denselben grundsätzlichen Aufbau wie der tragbare Datenträger 10 und verfügt ebenfalls über einen Mikroprozessor 62 zur Ausführung von Datenverarbeitungsoperationen sowie zugeordnete Speichermittel 64 zur flüchtigen sowie zur dauerhaften Speicherung von Informationen. In den Speichermitteln 64 ist eine Liste mit Kennungen von den tragbaren Datenträgern 10 dauerhaft abgelegt, für welche die Ausführung von Transaktionen mit dem Endgerät zugelassen ist. Es kann vorgesehen sein, daß ein Nutzer des Endgerätes 20 diese Liste verändern kann. Weiter befindet sich in den Speichermitteln 64 ein Referenzergänzungsprüfkode, der wie der in der zentralen Steuereinheit 30 abgelegte aufgebaut ist. Weiter besitzt das Einsatzmodul 60 Mittel zur Kommunikation mit der zentralen Steuereinheit 30 in Gestalt einer kontaktbehaftet oder kontaktlos arbeitenden Schnittstelle 66. Sie ist vorzugsweise so gestaltet, daß das Einsatzmodul 60 von einem Benutzer ohne Einsatz besonderer Hilfsmittel von den Endgerät 20 trennbar ist. Das Einsatzmodul 60 kann die Gestalt einer Chipkarte bzw. eines von Handys her bekannten Plug-Ins haben, die Schnittstelle 66 entsprechend als Karten-Lese/Schreibeinheit ausgeführt sein.

Das Datenübertragungsnetz 70 ist ein Vielteilnehmernetz, etwa ein Mobilfunknetz oder das Internet, an das weitere Teilnehmer 72, 74 anschließbar sind, im Dialog mit denen das Endgerät 20 Transaktionen ausführt. Die Transaktionen können von jeder beliebigen Art sein. Möglich sind etwa Transaktionen zur Bewegung von Geldwerten, in diesem Fall ist der mit dem Endgerät 20 kommunizierende Netzteilnehmer insbesondere ein Geldinstitut 72 oder ein anderes Endgerät 20, Transaktionen zur Inanspruchnahme einer von einem Dienstleistungsanbieter 74 angebotenen Dienstleistung, etwa die Buchung eines Hotels, oder Transaktionen zur Durchführung einer Service- oder Wartungsfunktion.

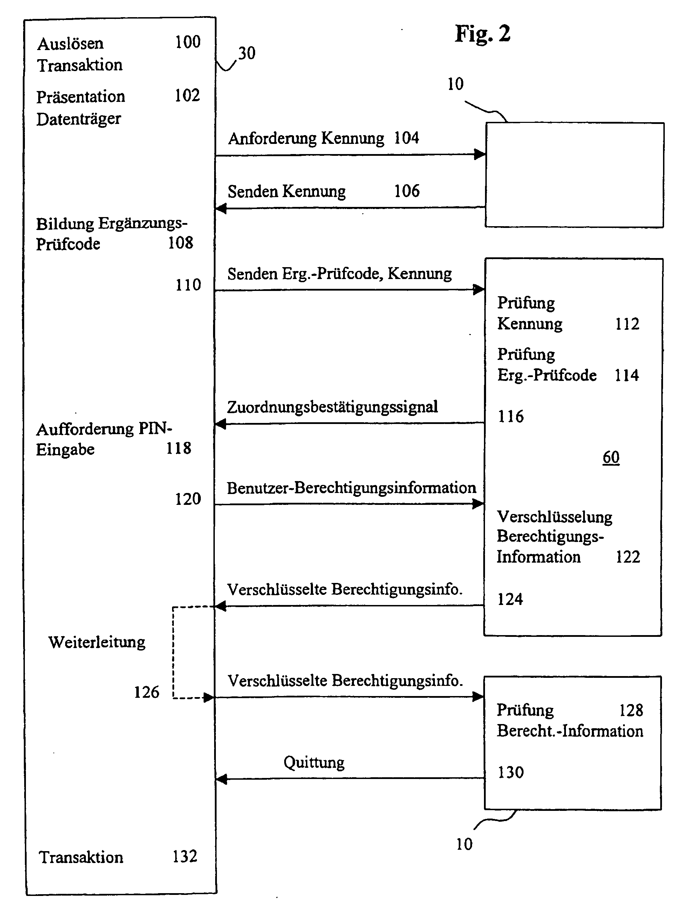

Fig. 2 veranschaulicht das Zusammenwirken der in Fig.1 gezeigten Elemente bei der Ausführung einer Transaktion. Der Benutzer löst dabei zunächst über die Bedienvorrichtung 50 eine Transaktion aus, welche die Einschaltung eines tragbaren Datenträgers 10 erfordert, Schritt 100. Zugleich oder auf Aufforderung durch die zentrale Steuereinheit 30, etwa über die Bildanzeigeeinheit 54, präsentiert der Benutzer der Datenträgerschnittstelle 40 einen der Transaktion zugeordneten tragbaren Datenträger 10, Schritt 102. Sobald die zentrale Steuereinheit 30 das Vorliegen eines tragbaren Datenträgers 10 an der Datenträgerschnittstelle 40 erkennt, veranlaßt sie die Datenträgerschnittstelle 40, von dem Datenträger 10 eine Datenträgerkennung anzufordern, Schritt 104. Der Datenträger 10 übermittelt hierauf der Datenträgerschnittstelle 40 eine in seinem Speicher 16 dauerhaft abgelegte Datenträgerkennung, Schritt 106.

Sind der zentralen Steuereinheit 30 die durchzuführende Transaktion und die Datenträgerkennung bekannt, wird durch die zentrale Steuereinheit 30 ein Ergänzungsprüfkode gebildet bzw. bereitgestellt, Schritt 108. In einfacher Weise liegt der Ergänzungsprüfkode im Speicher 32 der zentralen Steuereinheit 30 und ist durch einen Zugriff auf den Speicher 32 unmittelbar erhältlich. Den Ergänzungsprüfkode und die Datenträgerkennung übermittelt die zentrale Steuereinheit 30 im nächsten Schritt 110 an das Einsatzmodul 60.

Sind beide Informationen im Einsatzmodul 60 eingegangen, überprüft dessen Mikroprozessor 62, ob das Einsatzmodul 60 dem eingesetzten tragbaren Datenträger 10 zugeordnet ist. Hierzu bedient sich der Mikroprozessor der im Speicher 64 befindlichen Liste mit den Datenträgerkennungen aller dem Einsatzmodul 60 zugeordneten Datenträger 10. Mit dieser Liste vergleicht er die von der zentralen Steuereinheit 30 erhaltene Datenträgerkenn.ung des von dem Benutzer präsentierten Datenträgers 10, Schritt 112. Bestätigt der Vergleich durch Übereinstimmung der von der zentralen Steuereinheit 30 übermittelten Datenträgerkennung mit einer im Speicher 64 enthaltenen Datenträgerkennung die Zuordnung des tragbaren Datenträgers 10 zu dem Einsatzmodul 60, prüft der Mikroprozessor 62 im folgenden Schritt 114, ob. das Einsatzmodul 60 auch der zentralen Steuereinheit 30, mithin dem Endgerät 20 zugeordnet ist. Die Prüfung erfolgt durch Vergleich des von der zentralen Steuereinheit 30 übermittelten Ergänzungsprüfkodes mit einem im Speicher 64 des Einsatzmodules 60 abgelegten Referenzergänzungsprüfkode. Stimmen beide überein, sendet das Einsatzmodul 60 der zentralen Steuereinheit 30 ein Zuordnungsbestätigungssignal, Schritt 116.

Ist der zentralen Steuereinheit 30 ein Zuordnungsbestätigungssignal zugegangen, veranlaßt sie den Benutzer über die Bedienvorrichtung 50, etwa durch eine entsprechende Anzeige auf der Bildanzeigeeinheit 54, zur Eingabe einer Berechtigungsinformation über die Eingabemittel 52, Schritt 118. Die Berechtigungsinformation kann eine nur dem Benutzer bekannte Benutzeridentifikationsinformation sein, beispielsweise kann es sich in an sich bekannter Weise um eine PIN (Persönliche Identifikations-Nummer) handeln. Die vom Benutzer eingegebene Berechtigungsinformation übersendet die zentrale Steuereinheit 30 ohne Veränderung, d.h. im Klartext, an das Einsatzmodul 60, Schritt 120. Dessen Mikroprozessor 62 verschlüsselt die zugegangene Berechtigungsinformation, Schritt 122, und sendet die verschlüsselte Berechtigungsinformation zurück an die zentrale Steuereinheit 30, Schritt 124.

Diese empfängt die verschlüsselte Berechtigungsinformation und leitet sie ohne inhaltliche Bearbeitung über die Datenträgerschnittstelle 40 weiter an den tragbaren Datenträger 10, Schritt 126. Dessen integrierter Schaltkreis 12 prüft durch Auswertung der zugesandten verschlüsselten Berechtigungsinformation, ob der Benutzer zur Ausführung der gewünschten Transaktion berechtigt ist, Schritt 128. Der integrierte Schaltkreis 12 unterwirft hierzu die verschlüsselte Berechtigungsinformation einer mathematischen Bearbeitung und vergleicht das erhaltene Endergebnis mit einem im Speicher des tragbaren Datenträgers 10 abgelegten Referenzergebnis, Schritt 128. Stimmen beide überein, erzeugt der integrierte Schaltkreis 12 des tragbaren Datenträgers 10 ein Quittungssignal und sendet dieses über die Datenträgerschnittstelle 40 zurück an die zentrale Steuereinheit 30 des Endgerätes 20, Schritt 130. Mit Eingang des Quittungssignales des tragbaren Datenträgers 10 in der zentralen Steuereinheit 30 gilt der Benutzer als zur Durchführung der gewünschten Transaktion berechtigt. Die zentrale Steuereinheit 30 leitet darauf die den eigentlichen Transaktionsgegenstand betreffenden Transaktionsschritte ein, Schritt 132.

Führt eine der Prüfungen in den Schritten 112, 114 oder 128 zu einem negativen Ergebnis oder tritt während des Informationsaustausches ein Fehler auf, wird die vom Benutzer ausgelöste Transaktion nicht weiter ausgeführt. Zweckmäßig wird die Nichtausführung dem Benutzer über die Ausgabemittel 54 mitgeteilt.

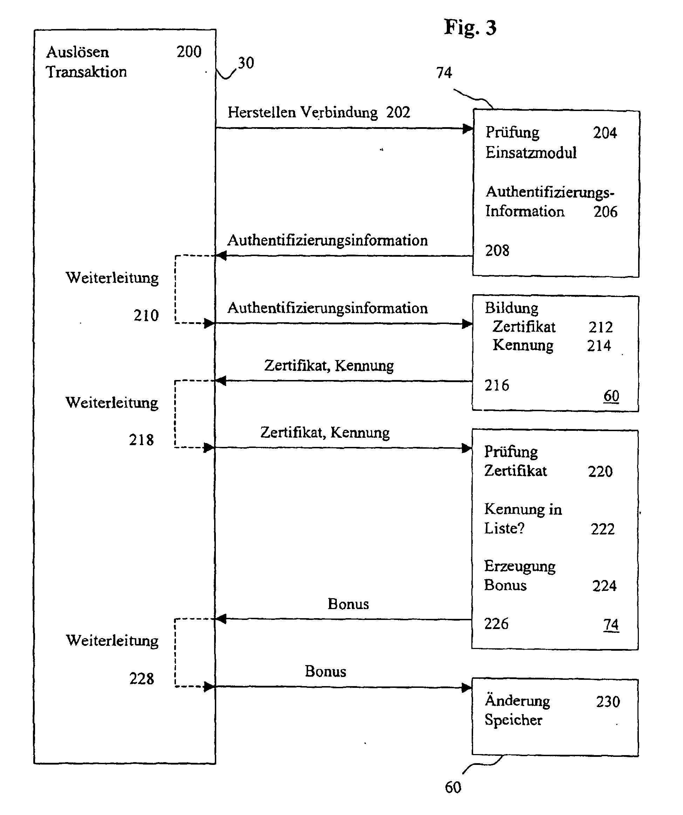

Das Einsatzmodul 60 kann außer zur Prüfung der Berechtigung eines Benutzers auch für andere Zwecke genutzt werden. Es kann beispielsweise genutzt werden, um einen Anreiz zur Nutzung der Leistung eines bestimmten Netzteilnehmers 72, 74 zu schaffen. Ein möglicher Datenaustausch in einer solchen Zusatznutzung ist in Fig. 3 veranschaulicht.

Der Benutzer wählt hierbei zunächst wiederum zunächst eine gewünschte Transaktion aus, Schritt 200. Die Auswahl kann eine Berechtigungsprüfung auslösen, wie sie in Verbindung mit Fig. 2 beschrieben wurde. Ist die Berechtigung des Benutzers erwiesen, stellt die zentrale Steuereinheit 30 über das Datenübertragungsnetz 70 eine Verbindung zu dem ausgewählten Netzteilnehmer 74 her, Schritt 202, bei dem es sich um einen Anbieter einer Dienstleistung handele. Der Anbieter 74 prüft, ob die gewünschte Transaktion die Einbeziehung eines Einsatzmodules 60 vorsieht, Schritt 204. Ist das der Fall, erzeugt der Anbieter 74 eine Authentifizierungsinformation zum Nachweis des Vorhandenseins einer dem Anbieter 74 zugeordneten Zusatzanwendung auf dem Einsatzmodul 60, Schritt 206. Die Authentifizierungsinformation übermittelt der Anbieter 74 über das Datenübertragungsnetz 70 an die zentrale Steuereinheit 30 des Endgerätes 20, Schritt 208.

Die zentrale Steuereinheit 30 empfängt die Authentifizierungsinformation und leitet sie ohne weitere Bearbeitung an das Einsatzmodul 60 weiter, Schritt 210. Dessen Mikroprozessor 62 bildet aus der Authentifizierungsinformation unter Verwendung eines zu diesem Zweck im Mikroprozessor 62 implementierten Algorithmus ein Zertifikat, Schritt 212. Aus dem Speicher 64 entnimmt der Mikroprozessor 62 desweiteren eine individuelle Kennung zur Bezeichnung des Einsatzmodules 30, Schritt 214. Kennung und Zertifikat sendet er sodann zurück an die zentrale Steuereinheit 30, Schritt 216.

Diese leitet beide erhaltenen Informationen ohne Veränderungen über das Datenübertragungsnetz 70 weiter an den Anbieter 74, Schritt 218. Hat der Anbieter 74 Zertifikat und Kennung des Einsatzmodules 60 erhalten, prüft er die Richtigkeit des Zertifikates, Schritt 220. Ergibt diese Prüfung, daß das Zertifikat richtig gebildet wurde, prüft er weiter, ob die Kennung des Einsatzmodules 60 in einer beim Anbieter 74 geführten Anreizliste enthalten ist, Schritt 222. Ist das der Fall, erzeugt der Anbieter 74 eine Zuatzanwendungsinformation, z.B. eine Bonusinformation, Schritt 224 und überträgt diese über das Datenübertragungsnetz 70 an die zentrale Steuereinheit 30 des Endgerätes 20, Schritt 226.

Jene leitet die Zusatzanwendungsinformation (z. B. Bonusinformation) ohne weitere Veränderung weiter an das Einsatzmodul 60, Schritt 228. Nach Empfang der Zusatzanwendungsinformation führt dessen Mikroprozessor 62 eine Änderung in dem der Transaktion zugeordneten Datenbestand im Speicher 64 aus, Schritt 230, welche dem Benutzer einen besonderen Vorteil einräumt. Beispielsweise erhöht der Mikroprozessor eine Punktzahl, welche den Benutzer bei Erreichen eines Grenzwertes zur Inanspruchnahme einer von dem Anbieter angebotenen besonderen Leistung berechtigt.

Das vorbeschriebene Endgerät 20 sowie das Zusammenwirken des Gesamtsystems sind in vielfacher Hinsicht variierbar, ohne daß dadurch der Rahmen der Erfindung verlassen werden würde. Dies gilt insbesondere im Hinblick auf die physikalische Ausführung der einzelnen Elemente. So kann etwa das Einsatzmodul 60 in einer Vielzahl von Erscheinungsformen gestaltet sein. Neben reinen auf die Funktion als Einsatzmodul abstellenden Erscheinungsformen kann es insbesondere Teil anderer Gegenstände sein, etwa einer Taschenrechners oder eines Schreibmittels. Auch kann das Einsatzmodul auf dem tragbaren Datenträger 10 realisiert sein. In diesem Fall prüft die zentrale Steuereinheit 30 zweckmäßig, ob ein gesondertes Einsatzmodul 60 oder ein auf dem tragbaren Datenträger 10 ausgebildetes eingesetzt wird. Zur weiteren Verbesserung der Manipulationssicherheit kann vorgesehen sein, dass der Ergänzungsprüfkode im Einsatzmodul und das entsprechende Gegenstück in der zentralen Steuereinheit erst festgelegt werden, wenn das Endgerät am Aufstellort erstmals benutzt wird. Ein weites Feld für Variationen bildet auch die Nutzung eines Einsatzmodules für Zusatzanwendungen. Beispielsweise können komplette Transaktionen oder Teilschrittfolgen davon auf Einsatzmodul 60 und Datenträger 10 verteilt sein, so daß eine vollständige Ausführung einer Transaktion nur möglich ist, wenn das Endgerät gleichzeitig auf einen tragbaren Datenträger und auf ein Einsatzmodul zugreifen kann.

## Patentansprüche

1. Verfahren zur Durchführung von Transaktionen unter Einschaltung eines tragbaren Datenträgers (10) mittels eines Endgerätes (20), welches eine zentrale Steuereinheit (30), ein mit der Steuereinheit (30) verbundenes Einsatzmodul (60), eine Bedienvorrichtung (50) zum Auslösen einer Transaktion durch einen Benutzer sowie ein Datenträgerschnittstelle (40) zur Führung einer Datenkommunikation mit einem tragbaren Datenträger (10) enthält,
wobei die ausführung einer Transaktion erfordert, daß der Benutzer dem tragbaren Datenträger (10) seine Berechtigung zur Durchführung der Transaktion nachweist, **gekennzeichnet, durch** folgende Schritte:
- Durchführen einer Prüfung, ob das Einsatzmodul (60) der Steuereinheit (30) zugeordnet ist, mit den Schritten:
- Bereitstellen eines Ergänzungsprüfcodes (108) in der zentralen Steuereinheit (30),
- Senden des Ergänzugsprüfcodes (110) an das Einsatzmodul (60),
- Prüfen (114) des Ergänzungsprüfcodes **durch** das Einsatzmodul (60),
- Übermitteln eines Zordnungsbestätigungssignales (116) an die zentrale Steuereinheit (30) bei Gutprüfung des Ergänzungsprüfcodes durch das Einsatzmodul (60).
- Durchführen der Prüfung der Berechtigung des Nutzers zur Ausführung der Transaktion **durch** den tragbaren Datenträger (10) unter Einbeziehung des Einsatzmodules (60) nach Eingang der Zuordnungsbestätigung-Signales in der zentralen Steuereinheit (60),
- Ausführen der von einem Benutzer ausgelösten Transaktion (132) **durch** die zentrale Steuereinheit (30).

2. Verfahren nach Anspruch 1, **dadurch gekennzeichnet, daß**
der Nachweis der Berechtigung eines Benutzers zur Durchführung einer Transaktion aufgrund einer nur dem Benutzer bekannten Berechtigungsinformation erfolgt, welcher von dem tragbaren Datenträger (10) ausgewertet wird.

3. Verfahren nach Anspruch 2, **dadurch gekennzeichnet, daß** die Berechtigungsinformation nur an den tragbaren Datenträger (10) übermittelt wird, wenn die zentrale Steuereinheit (30) ein Zuordnungsbestätigungssignal erhalten hat.

4. Verfahren nach Anspruch 1, **dadurch gekennzeichnet, daß** dem Einsatzmodul (60) eine Kennung des zur Durchführung einer Transaktion eingesetzten tragbaren Datenträgers (10) übermittelt wird (110).

5. Verfahren nach Anspruch 1, **dadurch gekennzeichnet, daß**
eine von einem Benutzer zum Nachweis seiner Berechtigung zur Durchführung einer Transaktion eingegebene Berechtigungssinformation an das Einsatzmodul (60) übermittelt wird (120).

6. Verfahren nach Anspruch 5, **dadurch gekennzeichnet, daß**
die Berechtigungsinformation im Klartext übermittelt wird.

7. Verfahren nach Anspruch 5, **dadurch gekennzeichnet, daß**
die Berechtigungsinformation im Einsatzmodul (60) verschlüsselt (122) und verschlüsselt an die zentrale Steuereinheit (30) zurückgesendet wird.

8. Verfahren nach Anspruch 7, **dadurch gekennzeichnet, daß**
die verschlüsselte Berechtigungsinformation an den tragbaren Datenträger (10) übermittelt wird (126).

9. Verfahren nach Anspruch 1, **dadurch gekennzeichnet, daß**
nach Auslösen einer Transaktion zwischen der zentralen Steuereinheit (30) und dem tragbaren Datenträger (10) einen Datenaustausch stattfindet, in dem festgestellt wird, ob der tragbare Datenträger (10) dazu ausgebildet ist, die Prüfung auf Vorliegen eines Ergänzungsprüfkodes durchzuführen.

10. Verfahren nach Anspruch 1, **dadurch gekennzeichnet, daß**
die zentrale Steuereinheit (30) prüft, ob das Einsatzmodul (60) in dem tragbaren Datenträger (10) realisiert ist.

11. Endgerät zur Durchführung von Transaktionen unter Einschaltung eines tragbaren Datenträgers mit
einer zentralen Steuereinheit (30),
einer Bedienvorrichtung (50) zum Auslösen einer Transaktion durch eine Benutzer,
einer Datenträgerschnittstelle (40) zur Führung einer Datenkommunikation mit einem tragbaren Datenträger (10), wobei die Ausführung einer Transaktion erfordert, daß der Benutzer dem tragbaren Datenträger (10) seine Berechtigung zur Durchführung der Transaktion nachweist,
**dadurch gekennzeichnet, daß**
das Endgerät (20) weiter ein Einsatzmodul (60) aufweist, das mit der zentralen Steuereinheit (30) verbunden ist, welches prüft, ob der zentralen Steuereinheit (30) ein vorgegebener Ergänzungsprüfcode vorliegt, welches der zentralen Steuereinheit (30) ein Zuordnungsbestätigungssignal übermittelt (116), wenn der vorgegebene Ergänzungsprüfcode vorliegt, und welches dazu eingerichtet ist, eine von der zentralen Steuereinheit zugeführte Berechtigungsinformation im Rahmen einer Berechtigungsprüfung zu verschlüsseln,
wobei die zentrale Steuereinheit (30) die zur Ausführung der Transaktion erforderliche Berechtigungsprüfung nur veranlaßt, wenn sie zuvor von dem Einsatzmodul (60) ein Zuordnungsbestätigungssignal

12. Endgerät nach Anspruch 11, **dadurch gekennzeichnet, daß**
das Einsatzmodul (60) lösbar mit der zentralen Steuereinheit (30) verbunden ist.

13. Endgerät nach Anspruch 12 **dadurch gekennzeichnet, daß**
das Einsatzmodul (60) von einem Benutzer ohne Hilfsmittel mit der zentralen Steuereinheit (30) verbindbar ist.

14. Einsatzmodul zur Durchführung einer Prüfung der Berechtigung eines Nutzers zur Durchführung einer Transaktion für ein Endgerät nach einem der Ansprüche 11 bis 13 **dadurch gekennzeichnet, daß** es in einem Speicher (64) die Kennungen von tragbaren Datenträgern (10) hält und es den Erhalt eines Ergänzungsprüfcodes (110), der in der zentralen Steuereinheit (30) bereitgestellt wird (108), nur prüft (114), wenn ihm eine der gespeicherten Kennungen übermittelt wird (106), und es in dem Speicher (64) weiter einen Ergänzungsprüfcode hält, und es eine Berechtigungsprüfung nur durchführt (112), wenn ihm ein mit dem gespeicherten übereinstimmende Ergänzungsprüfcode übermittelt wird.

## Claims

1. A method for carrying out transactions, while connecting a portable data carrier (10) by means of a terminal (20), which contains a central control unit (30), an insertion module (60) connected with the control unit (30), an operating apparatus (50) for a transaction being triggered by a user, and a data carrier interface (40) for conducting a data communication with a portable data carrier (10), wherein the carrying out of a transaction requires, that the user proves his authorization for carrying out the transaction vis-à-vis the portable data carrier (10), **characterized by** the following steps:
- performing a check, whether the insertion module (60) is allocated to the control unit (30), comprising the steps:
- providing an additional verification code (108) in the central control unit (30),
- sending the additional verification code (110) to the insertion module (60),
- checking (114) the additional verification code by the insertion module (60),
- transmitting an allocation acknowledgment signal (116) to the central control unit (30) upon the additional verification code having been checked to be approved by the insertion module (60).
- performing the check as to the user being authorized to carry out the transaction by the portable data carrier (10) involving the insertion module (60) upon receipt of the allocation acknowledgment signal in the central control unit (60),
- carrying out the transaction triggered by a user (132) by means of the central control unit (30).

2. The method according to claim 1, **characterized in that** the proof of a user being authorized to carry out a transaction is effected on the basis of an authorization information solely known to the user, such proof being evaluated by the portable data carrier (10).

3. The method according to claim 2, **characterized in that** the authorization information is transmitted to the portable data carrier (10) only when the central control unit (30) has received an allocation acknowledgment signal.

4. The method according to claim 1, **characterized in that** to the insertion module (60) is transmitted an identifier of the portable data carrier (10) used for carrying out a transaction (110).

5. The method according to claim 1, **characterized in that** an authorization information entered by a user as a proof of his authorization for carrying out a transaction is transmitted (120) to the insertion module (60).

6. The method according to claim 5, **characterized in that** the authorization information is transmitted in plain text.

7. The method according to claim 5, **characterized in that** the authorization information is encrypted (122) in the insertion module (60) and is sent back to the central control unit (30) in encrypted form.

8. The method according to claim 7, **characterized in that** the encrypted authorization information is transmitted to the portable data carrier (10) (126).

9. The method according to claim 1, **characterized in that** after a transaction having been triggered, between the central control unit (30) and the portable data carrier (10) a data exchange takes place, during which is detected, whether the portable data carrier (10) is adapted to carry out the check as to the presence of an additional verification code.

10. The method according to claim 1, **characterized in that** the central control unit (30) checks, whether the insertion module (60) is realized in the portable data carrier (10).

11. A terminal for carrying out transactions while connecting a portable data carrier with
a central control unit (30),
an operating apparatus (50) for a transaction being triggered by a user,
a data carrier interface (40) for conducting a data communication with a portable data carrier (10), wherein the carrying out of a transaction requires, that the user proves his authorization for carrying out the transaction vis-à-vis the portable data carrier (10),
**characterized in that**
the terminal (20) further has an insertion module (60) connected with the central control unit (30), which checks whether to the central control unit (30) is known a predetermined additional verification code, which transmits (116) to the central control unit (30) an allocation acknowledgment signal when the predetermined additional verification code is known, and which is adapted to encrypt an authorization information supplied by the central control unit within the framework of an authorization check,
wherein the central control unit (30) only arranges for the authorization check required for carrying out the transaction, when it has received an allocation acknowledgment signal by the insertion module (60) before.

12. The terminal according to claim 11, **characterized in that** the insertion module (60) is detachably connected with the central control unit (30).

13. The terminal according to claim 12, **characterized in that** the insertion module (60) is connectable with the central control unit (30) by a user without any aids.

14. An insertion module for carrying out a check as to a user being authorized to carry out a transaction for a terminal according to any of claims 11 to 13, **characterized in that** in a storage (64) it holds the identifiers of portable data carriers (10), and it only checks (114) the receipt of an additional verification code (110), which is provided (108) in the central control unit (30), when one of the stored identifiers is transmitted to it (106), and it further holds in the storage (64) an additional verification code, and it only carries out an authorization check (112), when an additional verification code is transmitted to it, that tallies with the stored additional verification code.

## Revendications

1. Procédé pour la réalisation de transactions avec la participation d'un support de données portable (10) au moyen d'un terminal (20), lequel comprend une unité de commande centrale (30), un module de mise en oeuvre (60) relié à l'unité de commande (30), un dispositif de commande (50) pour le déclenchement d'une transaction par un utilisateur ainsi qu'une interface de support de données (40) pour la conduite d'une communication de données avec un support de données portable (10), sachant que la réalisation d'une transaction nécessite que l'utilisateur prouve au support de données portable (10) qu'il est autorisé à réaliser la transaction, **caractérisé en ce qu'**il comprend les étapes suivantes :
- réalisation d'un contrôle portant sur l'affectation du module de mise en oeuvre (60) à l'unité de commande (30), comprenant les étapes consistant en :
- la mise à disposition d'un code de vérification complémentaire (108) dans l'unité de commande centrale (30),
- l'envoi du code de vérification complémentaire (110) au module de mise en oeuvre (60),
- le contrôle (114) du code de vérification complémentaire par le module de mise en oeuvre (60),
- la transmission d'un signal de confirmation d'affectation (116) à l'unité de commande centrale (30) en cas de résultat positif du contrôle du code de vérification complémentaire par le module de mise en oeuvre (60),
- réalisation du contrôle de l'autorisation de l'utilisateur pour la réalisation de la transaction par le support de données portable (10) avec l'association du module de mise en oeuvre (60) après l'entrée du signal de confirmation d'affectation dans l'unité de commande centrale (60),
- réalisation de la transaction déclenchée par un utilisateur (132) par l'unité de commande centrale (30).

2. Procédé selon la revendication 1, **caractérisé en ce que** la preuve que l'utilisateur est autorisé à réaliser une transaction est apportée au moyen d'une information d'autorisation connue uniquement de l'utilisateur, laquelle est évaluée par le support de données portable (10).

3. Procédé selon la revendication 2, **caractérisé en ce que** l'information d'autorisation n'est transmise qu'au support de données portable (10) lorsque l'unité de commande centrale (30) a reçu un signal de confirmation d'affectation.

4. Procédé selon la revendication 1, **caractérisé en ce qu'**un signal d'identification du support de données portable (10) installé pour la réalisation d'une transaction est transmis (110) au module de mise en oeuvre (60).

5. Procédé selon la revendication 1, **caractérisé en ce qu'**une information d'autorisation donnée par un utilisateur pour prouver qu'il est autorisé à réaliser une transaction est transmise (120) au module de mise en oeuvre (60).

6. Procédé selon la revendication 5, **caractérisé en ce que** l'information d'autorisation est transmise en texte clair.

7. Procédé selon la revendication 5, **caractérisé en ce que** l'information d'autorisation est cryptée (122) dans le module de mise en oeuvre (60), puis renvoyée une fois cryptée vers l'unité de commande centrale (30).

8. Procédé selon la revendication 7, **caractérisé en ce que** l'information d'autorisation cryptée est transmise (126) au support de données portable (10).

9. Procédé selon la revendication 1, **caractérisé en ce qu'**après le déclenchement d'une transaction entre l'unité de commande centrale (30) et le support de données portable (10) a lieu un échange de données permettant de vérifier si le support de données portable (10) est réalisé pour effectuer le contrôle lorsqu'un code de vérification complémentaire est proposé.

10. Procédé selon la revendication 1, **caractérisé en ce que** l'unité de commande centrale (30) contrôle si le module de mise en oeuvre (60) est réalisé dans le support de données portable (10).

11. Terminal pour la réalisation de transactions avec la participation d'un support de données portable, comprenant :
- une unité de commande centrale (30),
- un dispositif de commande (50) pour le déclenchement d'une transaction par un utilisateur,
- une interface de support de données (40) pour la conduite d'une communication de données avec un support de données portable (10), sachant que la réalisation d'une transaction nécessite que l'utilisateur apporte la preuve au support de données (10) qu'il est autorisé à réaliser la transaction,
**caractérisé en ce que**
- le terminal (20) comprend en outre un module de mise en oeuvre (60) qui est relié à l'unité de commande centrale (30), lequel contrôle si l'unité de commande centrale (30) propose un code de vérification complémentaire prédéfini, lequel transmet (116) à l'unité de commande centrale (30) un signal de confirmation d'autorisation lorsque le code de vérification complémentaire prédéfini est proposé, et lequel est installé pour coder une information d'autorisation conduite par l'unité de commande centrale dans le cadre d'un contrôle d'autorisation,
- sachant que l'unité de commande centrale (30) ordonne le contrôle d'autorisation nécessaire pour la réalisation de la transaction uniquement lorsqu'elle a reçu auparavant un signal de confirmation d'autorisation de la part du module de mise en oeuvre (60).

12. Terminal selon la revendication 11, **caractérisé en ce que** le module de mise en oeuvre (60) est relié de manière amovible à l'unité de commande centrale (30).

13. Terminal selon la revendication 12, **caractérisé en ce qu'**un utilisateur peut relier le module de mise en oeuvre (60) à l'unité de commande centrale (30) sans aide quelconque.

14. Module de mise en oeuvre pour la réalisation d'un contrôle de l'autorisation d'un utilisateur pour la réalisation d'une transaction pour un terminal selon l'une quelconque des revendications 11 à 13, **caractérisé en ce qu'**il contient les signaux d'identification du support de données portable (10) dans une mémoire (64) et **en ce qu'**il contrôle (114) la réception d'un code de vérification complémentaire (110), qui est mis à disposition (108) dans l'unité de commande centrale (30), uniquement lorsque l'un des signaux d'identification mémorisés lui est transmis (106), et **en ce qu'**il contient en outre dans la mémoire (64) un code de vérification complémentaire, et qu'il réalise (112) un contrôle d'autorisation uniquement lorsqu'un code de vérification complémentaire conforme aux codes mémorisés lui est transmis.
